# EUROPEAN PATENT APPLICATION

(11) **EP 2 433 824 A1**
(43) Date of publication of application: **28.03.2012**
(21) Application number: 10777491.1
(22) Date of filing: 26.03.2010
(51) Int. Cl.: B60G 17/015, B60G 17/016, B60G 17/0195, B60G 21/055, B60T 8/1755, B60W 30/02

(54) **GROUND CONTACT LOAD CONTROL DEVICE FOR VEHICLE**

(30) Priority: 21.05.2009 JP 2009122712; 21.05.2009 JP 2009122713
(71) Applicant: Aisin Seiki Kabushiki Kaisha, Aichi 448-8650 (JP); ADVICS CO., LTD., Kariya-shi, Aichi 448-8688 (JP)
(72) Inventor: HIDAKA, Seiji, Kariya-shi Aichi 448-8650 (JP); YASUI, Yoshiyuki, Kariya-city Aichi 448-8688 (JP); NAKANO, Keita, Kariya-city Aichi 448-8688 (JP); NITTA, Chihiro, Kariya-city Aichi 448-8688 (JP)
(74) Representative: Winter, Brandl, Fürniss, Hübner, Röss, Kaiser, Polte - Partnerschaft
(86) International application number: PCT/JP2010/002168
(87) International publication number: WO 2010/134251

(57) **Abstract**

There are provided a first stabilizer (SBr) disposed on an axle for driving wheels, a second stabilizer (SBf) disposed on a different axle from the axle for driving wheels, stabilizer control means (RT, FT) for adjusting torsional rigidity of the first stabilizer and second stabilizer, turning state amount obtaining means for obtaining a turning state amount of the vehicle, and accelerating operation amount obtaining means for obtaining an accelerating operation amount operated by a vehicle driver. Based on these obtained results, the torsional rigidity of at least one of the first stabilizer and second stabilizer is adjusted by the stabilizer control means, when the turning state amount of the vehicle is equal to or more than a predetermined turning state amount, and the accelerating operation amount is equal to or more than a predetermined accelerating operation amount.

## Description

### TECHNICAL FIELD

The present invention relates to a vertical load control apparatus for a vehicle, and more particularly to the vertical load control apparatus, which is provided with a stabilizer disposed between right and left wheels.

### BACKGROUND ART

When a vehicle is turning for example, in order to prevent a driving wheel located at the inside of its turning locus from being slipped, a so-called LSD (Limited Slip Differential) has been installed, and a mechanical limited slip differential apparatus and other various apparatuses having the LSD function have been known heretofore. For example, in the following Patent document 1, it is an object to restrain degradation of stability of a vehicle, when a braking force is applied so as to restrain a slip of a driving wheel at the higher speed side out of right and left driving wheels, and there is proposed a traction control apparatus, wherein when a control starting condition for a LSD brake control is satisfied, a braking force is applied so as to restrain the slip of the driving wheel at the higher speed side based on a wheel speed difference between the right and left driving wheels, and if a required driving force calculated on the basis of an accelerator pedal opening and engine speed is larger than a predetermined value, an electronic control throttle valve is controlled so that an engine driving force will be matched with the predetermined value (described in [ABSTRACT] of the Patent document 1). Furthermore, in the following Patent document 2, there is proposed a traction control apparatus for a vehicle capable of changing a brake fluid pressure in a hydraulic pressure circuit by appropriately adapting it to a increasing or decreasing change of a slip amount of the driving wheel.

### PRIOR ART DOCUMENT

### PATENT DOCUMENT

Patent document 1:
   Japanese Patent Laid-open Publication No.2004-316639
Patent document 2:
   Japanese Patent Laid-open Publication No.2007-69871

### SUMMARY OF THE INVENTION

### PROBLEMS TO BE SOLVED BY THE INVENTION

According to the traction control apparatuses as described in the Patent documents 1 and 2, in such a case that when a vehicle is turning, a vertical load to a driving wheel located at the inside of the turning locus is reduced so that a driving force has become unable to be transferred, for example, it is possible to apply a braking force to the driving wheel located at the inside of the turning locus, and apply a driving force of the same level as the braking force to the driving wheel located at the outside of the turning locus, thereby to apply the LSD function (Limited Slip Differential function) by means of the barking force. However, as it is the one achieved by applying the barking force to the wheel, an energy loss can not be avoided.

Also, a differential gear is the one for absorbing a rotational difference, which is caused by a different turning radius for each wheel when the vehicle is turning, and transferring an equal torque to each of the right and left driving wheels. Therefore, in order to increase the driving force by restraining the energy loss caused by the braking force, it is required to increase the vertical load to the driving wheel located at the inside of the turning locus out of the right and left driving wheels, i.e., the wheel located at such a side that the vertical load will be reduced due to the turning operation.

Therefore, according to the present invention, it is an object to provide a vertical load control apparatus having stabilizer control means for adjusting a torsional rigidity of a stabilizer disposed between right and left wheels, which is capable of controlling a vertical load particularly to a driving wheel located at the inside of a turning locus out of the right and left driving wheels, effectively and appropriately.

### MEANS FOR SOLVING THE PROBLEMS

To solve the above-described problems, according to the present invention, in a vertical load control apparatus for a vehicle having a first stabilizer disposed on an axle for driving wheels of the vehicle, a second stabilizer disposed on a different axle from the axle for the driving wheels, stabilizer control means for adjusting torsional rigidity of the first stabilizer and second stabilizer, turning state amount obtaining means for obtaining a turning state amount of the vehicle, and accelerating operation amount obtaining means for obtaining an accelerating operation amount operated by a driver of the vehicle, the stabilizer control means is constituted to adjust the torsional rigidity of at least one of the first stabilizer and second stabilizer, when it is determined on the basis of the results obtained by the turning state amount obtaining means and accelerating operation amount obtaining means that the turning state amount of the vehicle is equal to or more than a predetermined turning state amount, and that the accelerating operation amount is equal to or more than a predetermined accelerating operation amount.

In the vertical load control apparatus as described above, the stabilizer control means may be constituted to execute at least one of decreasing the torsional rigidity of the first stabilizer and increasing the torsional rigidity of the second stabilizer control means. Also, the stabilizer control means may be constituted to calculate a modified torsion value to a desired torsion value for at least one of the first stabilizer and second stabilizer, based on the turning state amount and accelerating operation amount. Furthermore, the stabilizer control means may be constituted to provide a limit for the modified torsion value.

In the vertical load control apparatus as described above, it may further comprise brake control means for applying a braking torque to each wheel of the vehicle, and the brake control means may be constituted to apply a braking torque for compensating a change in a steer characteristic of the vehicle, which is caused by adjusting the torsional rigidity, when the stabilizer control means adjusts the torsional rigidity of at least one of the first stabilizer and second stabilizer.

Or, in the vertical load control apparatus as described above, it may further comprise brake control means for applying the braking torque to each wheel of a vehicle with a rear wheel drive system, and the brake control means may be constituted to apply the braking torque to a rear wheel located at the inside of a turning locus of the vehicle, out of the wheels.

Or, in the vertical load control apparatus as described above, it may further comprise brake control means for applying the braking torque to each wheel of the vehicle, and the stabilizer control means may be constituted to adjust the vertical load to an inside driving wheel located at the inside of the turning locus, out of the driving wheels, to be increased up to a first control limit, and the brake control means may be constituted to apply the braking torque to the inside driving wheel, until the vertical load to the inside driving wheel reaches a second control limit, which is provided on the basis of the first control limit. Furthermore, it may further comprise driving output control means for adjusting an output from a power source of the vehicle, and the driving output control means may be constituted to reduce the output from the power source, when the vertical load to the inside driving wheel exceeds the second control limit.

Also, it may further comprise brake control means for applying the braking torque to each wheel of the vehicle, and the brake control means may be constituted to apply the braking torque for compensating a change in a steer characteristic of the vehicle, which is caused by adjusting the torsional rigidity of at least one of the first stabilizer and second stabilizer, when at least one of the first stabilizer and second stabilizer reaches the limit for the modified torsion value provided by the stabilizer control means. Furthermore, it may further comprise driving output control means for adjusting the output from a power source of the vehicle, and the driving output control means may be constituted to reduce the output from the power source, when at least one of the first stabilizer and second stabilizer reaches the limit for the modified torsion value provided by the stabilizer control means.

### EFFECTS OF THE INVENTION

As the present invention has been constituted as described above, the following effects are achieved. That is, based on the results obtained by the turning state amount obtaining means and accelerating operation amount obtaining means, when the turning state amount of the vehicle is equal to or more than a predetermined turning state amount, and the accelerating operation amount is equal to or more than a predetermined accelerating operation amount, the stabilizer control means adjusts the torsional rigidity of at least one of the first stabilizer and second stabilizer, whereby the vertical load to the driving wheel particularly located at the inside of the turning locus can be controlled appropriately, to ensure a stable turning feeling or drivability for a driver.

In the vertical load control apparatus as described above, if the stabilizer control means is constituted to execute at least one of decreasing the torsional rigidity of the first stabilizer and increasing the torsional rigidity of the second stabilizer, the vertical load can be controlled appropriately. Also, if a modified torsion value to a desired torsion value for at least one of the first stabilizer and second stabilizer, is adapted to be calculated, based on the turning state amount and accelerating operation amount, the vertical load can be certainly controlled with a simple structure. Furthermore,
if a limit is provided for the modified torsion value, a stable stabilizer control can be achieved.

Furthermore, if the braking torque is applied by the brake control means to compensate a change in a steer characteristic of the vehicle, which is caused by adjusting the torsional rigidity by the stabilizer control means, a vehicle stability can be ensured, in addition to the effects as described above. Particularly, by adjusting the vertical load to the inside driving wheel to be increased up to the first control limit, and applying the braking torque to the inside driving wheel, until the vertical load to the inside driving wheel reaches the second control limit, a slip can be prevented, and the driving force can be ensured for the inside driving wheel, so that a stable turning feeling or drivability can be ensured for a driver.

Furthermore, if the driving output control means is provided and the vertical load is adapted to reduce the output from the power source, when the vertical load to the inside driving wheel exceeds the second control limit, the vehicle stability can be ensured. Also, if the torsional rigidity is adjusted by applying the braking torque when at least one of the first stabilizer and second stabilizer reaches the limit for the modified torsion value, the change in the steer characteristic of the vehicle can be compensated.

### BRIEF DESCRIPTION OF THE DRAWINGS

[FIG.1] is a block diagram of a vertical load control apparatus according to an embodiment of the present invention.
[FiG.2] is a graph for explaining about a torsion spring characteristic of a stabilizer in an embodiment of the present invention.
[FIG.3] is a graph for explaining about adjusting a vertical load by controlling a torsional rigidity of a stabilizer in an embodiment of the present invention.
[FIG.4] is a flow chart for a vertical load control in a first embodiment of the present invention.
[FIG.5] is a flow chart for a vertical load control in a second embodiment of the present invention.
[FIG.6] is a flow chart for a vertical load control in the second embodiment of the present invention.
[FIG.7] is a diagram showing a map for determining first and second control limits in the second embodiment of the present invention.
[FIG.8] is a flow chart for a vertical load control in a third embodiment of the present invention.
[FIG.9] is a flow chart for a vertical load control in a fourth embodiment of the present invention.

### EMBODIMENTS FOR CARRYING OUT THE INVENTION

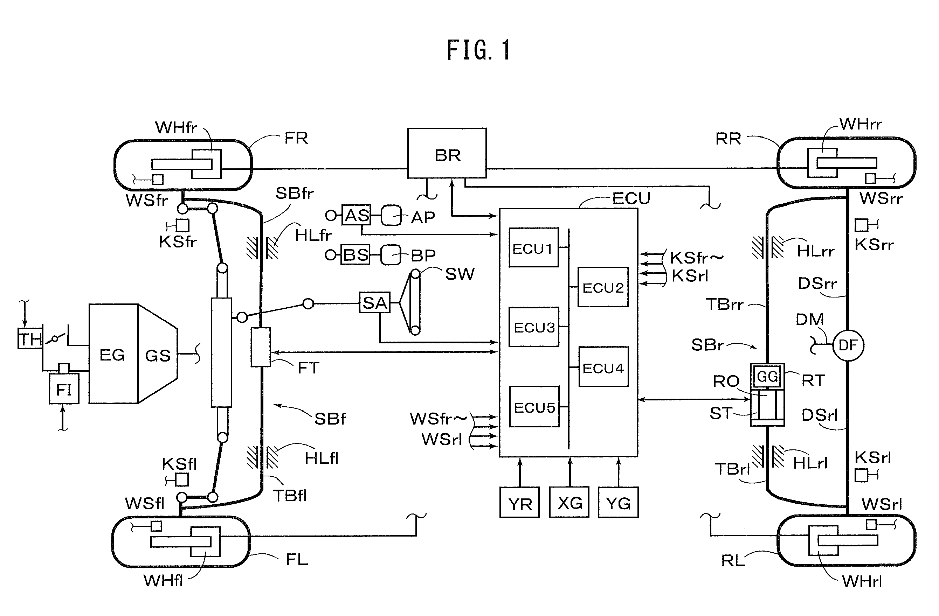

Hereinafter, will be explained desirable embodiments of the present invention. At the outset, an overall structure of a vehicle provided with a vertical load control apparatus according to an embodiment of the present invention will be explained, with reference to FIG.1. In FIG.1, an attached letter (xx) designates each wheel, so that "fr" designates a front wheel at the right side, "fl" designates a front wheel at the left side, "rr" designates a rear wheel at the right side, and "rl" designates a rear wheel at the left side. With respect to a turning direction of the vehicle, either a right turning direction or left turning direction is to be considered, so that either a positive sign or a negative sign is generally applied to distinguish them. For example, the left turning direction is designated as the positive sign, whereas the right turning direction is designated as the negative sign. However, when explaining large or small relationship of the value, and increase or decrease of the value, it will be very complicated to take its sign into consideration. According to the present application, therefore, unless otherwise indicated, they are designated as large or small relationship of its absolute value, and increase or decrease of its absolute value. As for a predetermined value, the positive sign is used.

In the present embodiment, an output of an engine (EG) is transferred to drive shafts (DSrr, DSrl), via a propeller shaft (DM) and a differential gear (DF), to drive right and left wheels (RR, RL) located at the rear side of the vehicle. According to the present embodiment, employed is a rear wheel drive vehicle with the rear right and left wheels (RR, RL) only acting as driving wheels. However, it can be used for a front wheel drive vehicle with the front right and left wheels acting as driving wheels. And, wheel cylinders (WHxx) for a brake device are disposed on the front right wheel (FR), front left wheel (FL), rear right wheel (RR) and rear left wheel (RL), respectively. In FIG.1, "TH" designates a throttle actuator, "FI" designates a fuel injection device, and "GS" designates a shift control device.

On the wheels (FR, FL, RR, RL), there are disposed wheel speed sensors (WSxx), which are connected to an electronic control device (ECU), to which a rotational speed of each wheel, i.e., pulse signal with pulses proportional to wheel speeds (Vwxx), shall be input. In the electronic control device (ECU), a vehicle speed (V) is calculated based on the wheel speeds (Vwxx). Also, load sensors (KSxx) for detecting vertical load (Fzxx) applied to each wheel, a steering angle sensor (SA) for detecting a steering angle .handle operation angle..f of a steering wheel (SW), a longitudinal acceleration sensor (XG) for detecting a longitudinal acceleration (Gx) of the vehicle, a lateral acceleration sensor (YG) for detecting a lateral acceleration (Gy) of the vehicle, a yaw rate sensor (YR) for detecting a yaw rate (Yr) of the vehicle, and etc. are connected to the electronic control device (ECU). Furthermore, an accelerator opening angle sensor (AS) for outputting a signal in response to an operation amount (e.g., accelerator opening angle .a) of an accelerator pedal (AP) by a driver, a brake sensor (BS) for outputting a signal in response to an operation amount of a brake pedal (BP), brake actuators (BR) for controlling brake pressure in each wheel cylinder, and etc. are connected to the electronic control device (ECU).

In the electronic control device (ECU), there are constituted a stabilizer control unit (ECU1), brake control unit (ECU2), throttle control unit (ECU3), indication control unit (ECU4) and the like, which are connected to a communication bus through a communication unit (ECU5) having CPU, ROM and RAM for use in communication. Therefore, the information required for each control system can be transmitted by other control systems.

And, in the vehicle of the present embodiment, there are disposed a front wheel stabilizer (SBf) and a rear wheel stabilizer (SBr), which will act as torsion springs, when a rolling motion is input. The front wheel stabilizer (SBf) and rear wheel stabilizer (SBr) are constituted so that torsional rigidity (torsion angle) of them will be adjusted (variably controlled) by the stabilizer actuators (FT and RT), respectively.

A practically constituted example of the stabilizer actuator (RT) (also, FT is constituted in the same manner) is shown in FIG.1, wherein the rear wheel stabilizer (SBr) is divided into a pair of right and left stabilizer bars (torsion bars, TBrr and TBrl), one end of each bar is connected to a right or left wheel (RR, RL), and the other end of one bar is connected to a rotor (RO) of an electric motor (M) through a speed reducing mechanism (GG), and the other end of the other one bar is connected to a stator (ST) of the electric motor (M). The stabilizer bars (TBrr and TBrl) are held on the vehicle body by holding members (HLrr and HLrl). Consequently, when the electric motor (M) is energized, torsional force (torsion angle) is created on each of the divided stabilizer bars (TBrr and TBrl), so that apparent torsion spring characteristic (torsional rigidity) of the rear wheel stabilizer (SBr) is changed, whereby the roll rigidity of the vehicle body is controlled. Also, a rotational angle sensor (not shown) is disposed in the stabilizer actuator (RT), to act as rotational angle detection means for detecting a rotational angle of the electric motor (M). As for a power source for the stabilizer actuator (RT), instead of the electric motor (M), a pump (not shown) driven by a motor or engine may be used to perform a hydraulic pressure control.

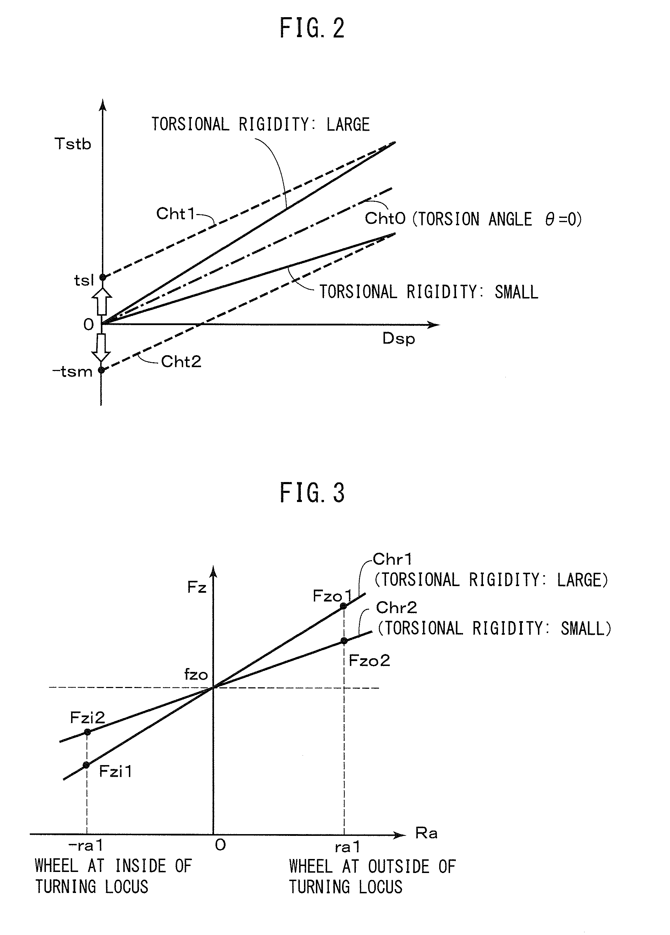

FIG.2 is provided for explaining change (adjustment) of the torsion spring characteristic (torsional rigidity) of the rear wheel stabilizer (SBr), and shows a characteristic of the torsional force (torsional torque, Tstb) created on the rear wheel stabilizer (SBr), against displacement (Dsp) at the wheel ends of the stabilizer bars (TBrr and TBrl). With respect to the front wheel stabilizer (SBf), the same relationship will be made as in the above. As indicated by one dot chain line in FIG.2, when a relative displacement between the electric motor ends of the stabilizer bars (TBrr and TBrl) is zero (i.e., the electric motor (M) is locked, so that the torsion angle =0), the torsion spring characteristic becomes a characteristic (Cht0) with the stabilizer bars (TBrr and TBrl) being integrated (fixed together). When the electric motor (M) is actuated to create a torque (tsl) in a direction opposite to the torsional direction of the rear wheel stabilizer (SBr), the relative displacement between the electric motor ends will be caused (to increase the torsion angle), so that the torsion spring characteristic of the rear wheel stabilizer (SBr) becomes a characteristic (Cht1) as shown by the one dot line at the upper side. On the contrary, when the electric motor (M) is actuated to create a torque (-tsm) in the same direction as the torsional direction of the rear wheel stabilizer (SBr), the relative displacement between the electric motor ends will be caused (to decrease the torsion angle), so that the torsion spring characteristic of the rear wheel stabilizer (SBr) becomes a characteristic (Cht2) as shown by the one dot line at the lower side. Accordingly, by controlling electric supply to the electric motor (M) to adjust its output torque properly, the torsion spring characteristic of the rear wheel stabilizer (SBr) can be adjusted into either "characteristic of large torsional rigidity" as shown by the solid line at the upper side in FIG.2, or "characteristic of small torsional rigidity" as shown by the solid line at the lower side in FIG.2.

FIG.3 is provided for explaining adjustment of vertical load by the torsional rigidity control of the rear wheel stabilizer (SBr), and shows a vertical load (Fz) versus roll angle (Ra) of the vehicle. In FIG.3, when the vehicle travels straight, a vertical load shift due to turning operation will not be caused, to result in a normal value (fzo). When the vehicle turns, its body causes a rolling motion, so that the vertical load will be varied. For example, when the roll angle (Ra) is a predetermined value (ra1), the vertical load to the wheel located at the outside of the turning locus will be increased, and the vertical load to the wheel located at the inside of the turning locus will be decreased. When the torsional rigidity of the stabilizer is large, the vertical load will be varied according to the characteristic (Chr1) in FIG.3, and when the torsional rigidity of the stabilizer is small, the vertical load will be varied according to the characteristic (Chr2) in FIG.3.

Accordingly, in the case where the driving wheels are rear wheels, if the torsional rigidity of the rear wheel stabilizer (SBr) is increased, the variation of the vertical load (the amount varied from the normal value (fzo) in FIG.3) will become large, and if the torsional rigidity is decreased, the variation of the vertical load will become small. Therefore, if the torsional rigidity of the rear wheel stabilizer (SBr) is decreased, the vertical load to the rear wheel located at the inside of the turning locus will be increased. Also, if the torsional rigidity of the front wheel stabilizer (SBf) is increased, the roll rigidity of the vehicle as a whole will be increased. As a result, the roll angle (Ra) of the vehicle will become small, so that the variation of the vertical load to the rear wheel will be decreased. On the contrary, if the torsional rigidity of the front wheel stabilizer (SBf) is decreased, the roll rigidity of the vehicle body as a whole will be decreased, and the roll angle (Ra) of the vehicle will become large, so that the variation of the vertical load to the rear wheel will be increased. Therefore, if the torsional rigidity of the front wheel stabilizer (SBf) is increased, the rear wheel located at the inside of the turning locus will be increased.

Likewise, in the case where the driving wheels are front wheels, if the torsional rigidity of the front wheel stabilizer (SBf) is decreased, the vertical load to the front wheel located at the inside of the turning locus will be increased. Also, if the torsional rigidity of the rear wheel stabilizer (SBr) is increased, the vertical load to the front wheel located at the inside of the turning locus will be increased. Therefore, by decreasing the torsional rigidity of the driving wheel (e.g., rear wheel), and increasing the torsional rigidity of the wheel different from the driving wheel (e.g., front wheel), the vertical load to the driving wheel located at the inside of the turning locus can be increased, and variation of the roll angle of the vehicle body can be restrained.

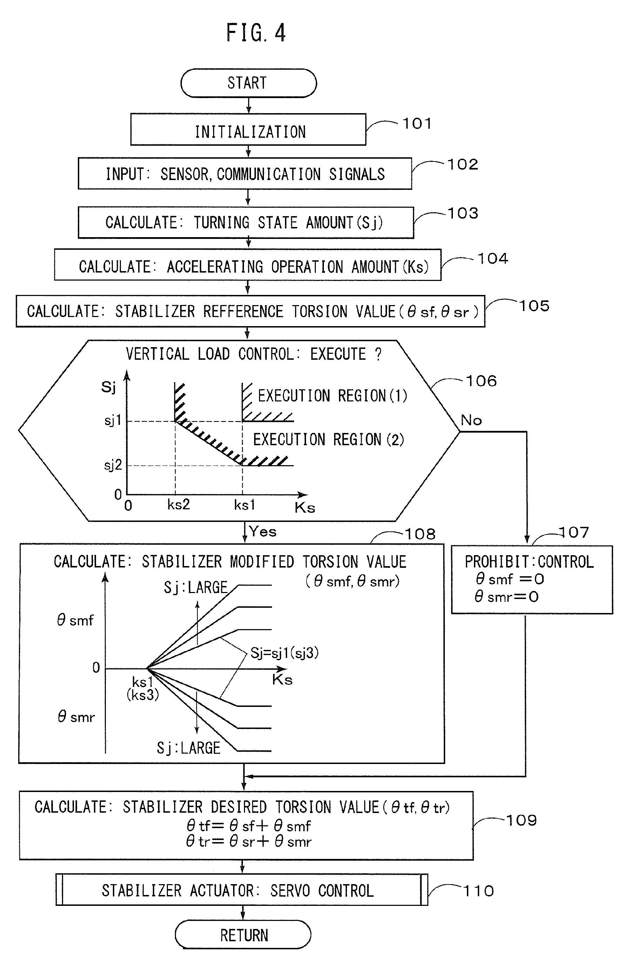

Hereinafter, explained are various embodiments for the rear wheel drive vehicle with its driving wheels being rear wheels. At the outset, a first embodiment will be explained, referring to a flowchart in FIG.4. At Step 101, an initialization is made, and at Step 102, the signals detected by each sensor and internally calculated value in each control system are read directly, or through the communication bus. Next, at Step 103, based on those signals, a turning state amount (Sj) provided for the controls as described above is calculated. The turning state amount (Sj) is a state amount which indicates a level of turning operation of a vehicle, and is calculated on the basis of at least one of actual lateral acceleration of a vehicle (actual lateral acceleration, Gya), yaw rate (Yr) and steering angle (.f). Then, at Step 104, an accelerating operation amount (Ks), which indicates a level of acceleration required by a vehicle driver, is calculated on the basis of the operation amount (.a) of an accelerating operation member (e.g., accelerator pedal (AP)).

Furthermore, at Step 105, based on the turning state amount (Sj), reference torsion values (.sf, sr) provided as the desired values for the front wheel stabilizer (SBf) and rear wheel stabilizer (SBr) are calculated. In this embodiment, the "torsion value" is a torsion angle (e.g., rotational angle of the electric motor (M)), while torsional force (e.g., rotational force of the electric motor (M)) may be used for the "torsion value". Then, "torsion value is relatively large" corresponds to "torsinal rigidity is high", and "torsion value is relatively small" corresponds to "torsinal rigidity is low".

The reference torsion values (.sf, sr) as described above are calculated on the basis of the K1, Gya, Gye, for example. In this respect, the estimated lateral acceleration (Gye) is calculated according to
Gye = (V..f)/[L.N.(1+ Kh.V')], wherein "V" is vehicle speed, ". f" is steering angle, "L" is wheel base, "N" is steering gear ratio, "Kh" is stability factor. And, "K1" (value of equal to or smaller than 1) is a control gain. This "K1" is set based on the steering angle (.f), such that when the steering angle (.f) is relatively small, "K1" is set to be a small value, and when the steering angle (.f) is relatively large, "K1" is set to be a large value.

Next, at Step 106, it is determined whether or not the vertical load control is to be executed. That is, it is determined whether or not the accelerating operation amount (Ks) is equal to or larger than a predetermined value (ks1), and the turning state amount (Sj) is equal to or larger than a predetermined value (sj1), thereby to be fallen within an execution region (1). If it is determined that they are fallen within the execution region (1), the vertical load control will be executed. Or, by using the predetermined values (ks1, ks2) and predetermined values (sj1, sj2), it may be determined whether or not the amount and value are fallen within an execution region (2), which is set according to a two dimensional relationship of the accelerating operation amount (Ks) and the turning state amount (Sj), and if it is determined that they are fallen within the execution region (2), the vertical load control may be executed.

If it is determined at Step 106 that they are fallen within the execution region (1) or (2), it proceeds to Step 108, where, based on the turning state amount (Sj) and accelerating operation amount (Ks), modified torsion values (.smf, .smr) provided as the desired values for the vertical load control by the front wheel stabilizer (SBf) and rear wheel stabilizer (SBr) are calculated. That is, the modified torsion value (.smf) is calculated so as to increase the torsional rigidity of the front wheel stabilizer (SBf), and the modified torsion value (.smr) is calculated so as to decrease the torsional rigidity of the rear wheel stabilizer (SBr). In this respect, the predetermined values (ks1 and sj1) at Step 108 correspond to the execution region (1) at Step 106. The predetermined values (ks3 and sj3) correspond to the values by which the relationship between (ks and sj) is shifted from the outside of the execution region (1) at Step 106 into the execution region (2). On the other hand, if it is determined at Step 106 that they are not fallen within the execution region (1) or (2), prohibiting process is made at Step 107, thereby to set the modified values (.smf and .smr) to be zero, and it proceeds to Step 109.

And, at Step 109, desired torsion values (.tf, tr) provided as the last desired values for the front wheel stabilizer (SBf) and rear wheel stabilizer (SBr) are calculated according to .tf = .sf + .smf, and .tr = .sr + .smr, respectively. Accordingly, at Step 110, based on the desired torsion values (.tf, .tr) and the actual torsion values (.af, .ar), a servo control for the front wheel stabilizer (SBf) and rear wheel stabilizer (SBr) is made in such a manner that the actual value (e.g., value detected by the rotational angle sensor) will match with the desired value.

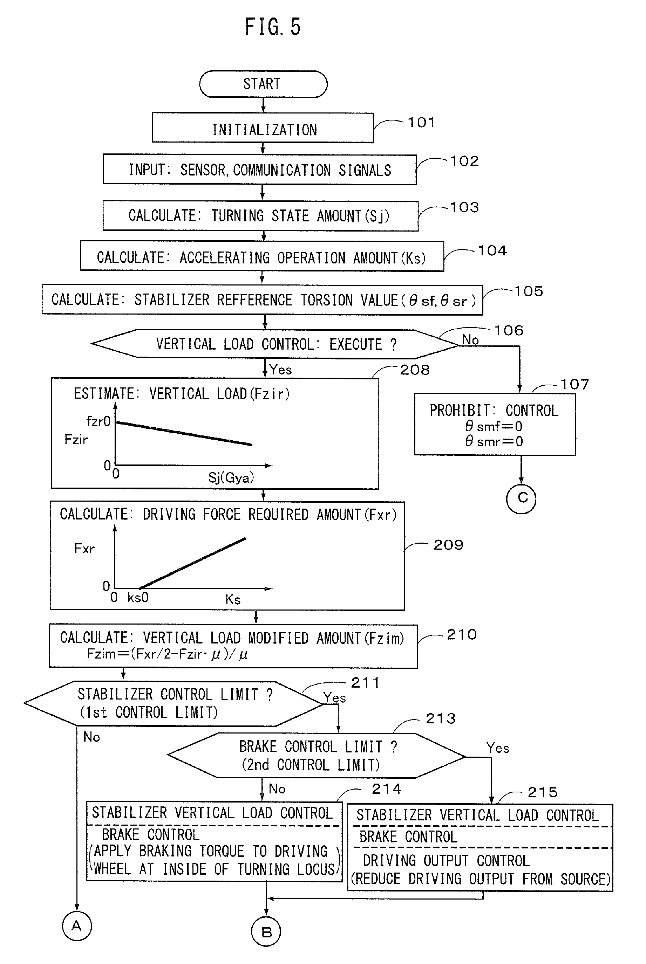

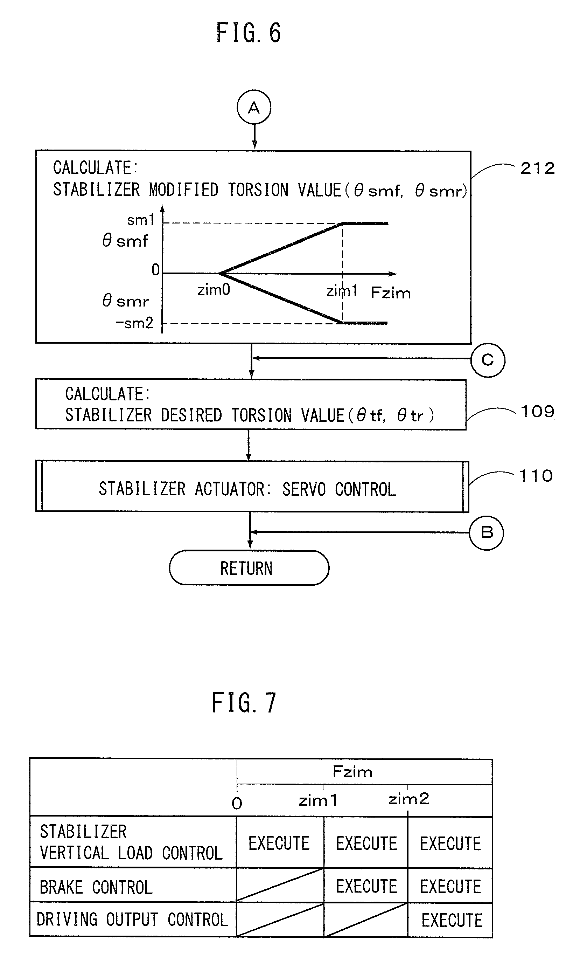

Next, FIG.5 and FIG.6 show a second embodiment, wherein Steps 101-107, 109 and 110 are substantially the same as those of the first embodiment shown in FIG.4, so that the same Step numbers are put to omit explanation thereof. According to the present embodiment, if it is determined at Step 106 that they are fallen within the execution region (1) or (2), it proceeds to Step 208, where a vertical load (Fzir) of the driving wheel located at the inside of turning locus is calculated, based on the turning state amount (Sj), e.g., actual lateral acceleration (Gya). Instead of this estimation based on the turning state amount (Sj), may be used an actual vertical load (Fzxx) detected by the vertical load sensor (KSxx). Then, it proceeds to Step 209, where, based on the accelerating operation amount (Ks), e.g., operation amount (.a), an acceleration torque required by a vehicle driver, i.e., driving force required amount (Fxr) is calculated. Next, at Step 210, based on the characteristic of the differential gear (DF) for distributing the driving force equally, a vertical load modified amount (Fzim) corresponding to an increased amount of the vertical load to the driving wheel located at the inside of the turning locus is calculated by Fzim = (Fxr/2 - Fzir..) /., where "." is a road surface coefficient of friction, which can be obtained by a known manner, such as a process for calculating it by use of the saturated actual lateral acceleration (Gya), for example.

Then, as the performance of the stabilizer actuator (FT, RT) (output of the electric motor (M)) has been known in advance, based on that, a limit to the vertical load control by the stabilizer (first control limit) is set at Step 211. That is, as for the vertical load modified amount (Fzim) of the driving wheel located at the inside of the turning locus, a predetermined value (zim1) is set as the first control limit value. In case of Fzim < zim1, it is determined that the stabilizer control has not reached the first control limit, and it proceeds to Step 212, where only the stabilizer control is executed. If it is determined that the vertical load modified amount (Fzim) of the driving wheel located at the inside of the turning locus is equal to or larger than the first control limit value (zim1 . Fzim),
it further proceeds to Step 213, where it is determined whether the stabilizer control has reached the second control limit. As for the vertical load modified amount (Fzim) of the driving wheel located at the inside of the turning locus, a predetermined value (zim2) is set as the second control limit value. In case of zim1 . Fzim < zim2, it is determined that the stabilizer control has exceeded the first control limit, but has not reached the second control limit, then it proceeds to Step 214, where the brake control will be made instead of the stabilizer control. That is, the braking torque will be applied to the driving wheel located at the inside of the turning locus. Consequently, the driving torque applied to the driving wheel located at the outside of the turning locus will be increased by the differential gear (DF), by the amount of torque corresponding to the applied braking torque.

Then, at Step 213, if it is determined that the vertical load modified amount (Fzim) of the driving wheel located at the inside of the turning locus is equal to or larger than the second control limit value (zim2 . Fzim), it proceeds to Step 215, where a driving output control is executed to reduce the driving output from the power source by the driver's operation, in addition to the above controls, because the vertical load to the required driving force (Fxr) runs short, with respect to the driving wheel located at the outside of the turning locus, too. FIG.7 shows a determination map based on the first control limit value (zim1) and second control limit value (zim2). As described above, the second embodiment is different from the first embodiment, with respect to two points as follows. That is, firstly, the vertical load (Fzir) of the driving wheel located at the inside of turning locus is calculated to be estimated, and the vertical load modified amount (Fzim) is obtained, then, based on the vertical load modified amount (Fzim), a modified torsion value is calculated. Secondly, the control limits (first control limit, second control limit) are determined, and according to a priority based on the determined result, not only the stabilizer control but also the brake control and driving output control (throttle control) will be executed.

According to the second embodiment as described above, the brake control is executed in addition to the stabilizer control, if the vertical load modified amount (Fzim) of the driving wheel located at the inside of the turning locus has become equal to or larger than the first control limit value. Instead, it may be so constituted that the execution of the brake control (applying the braking torque) is initiated, provided that the actual torsion values of the vertical load control by the front wheel stabilizer (SBf) and rear wheel stabilizer (SBr) have reached the modified torsion values (.smf, .smr). Furthermore, in addition to the execution of the brake control, it may be so constituted that reduction of the output from the power source by the driving output control is initiated in addition to the brake control. That is, what the actual torsion values of the stabilizers have reached the modified torsion values (.smf, .smr) means that the stabilizer control has reached its limit, so that the steer characteristic of the vehicle will change apparently. Accordingly, by initiating application of the braking torque, change in the steer characteristic can be compensated. Also, with the output of the power source being decreased, stability of the vehicle can be ensured.

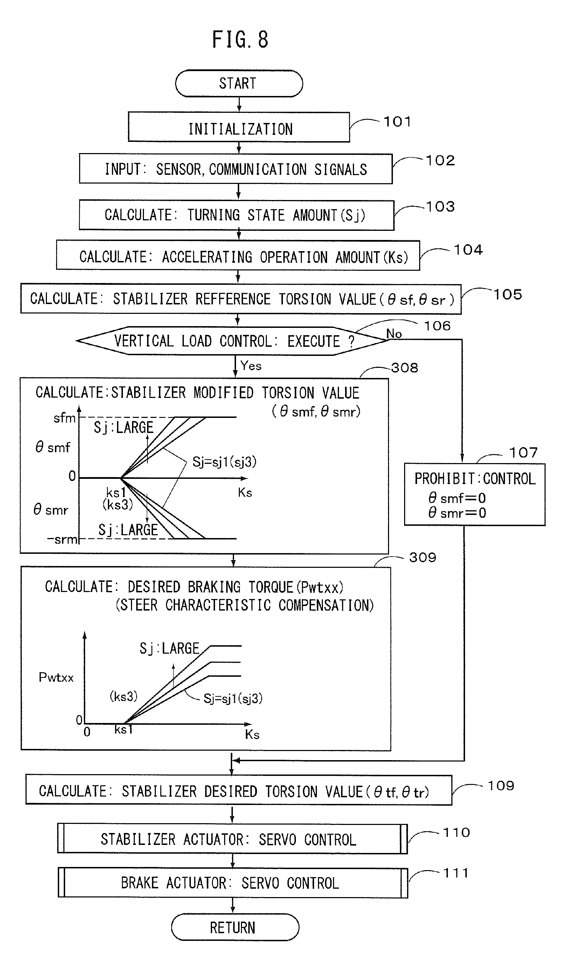

Furthermore, FIG.8 shows a third embodiment, wherein Steps 101-107, 109 and 110 are substantially the same as those in the first embodiment shown in FIG.4, so that the same Step numbers are put to omit explanation thereof. When the torsional rigidity of the stabilizer is adjusted to control the vertical load, level of the steer characteristic (under-steer, or over-steer) of the vehicle will change. For example, if the torsional rigidity of the rear wheel stabilizer (SBr) is decreased and/or the torsional rigidity of the front wheel stabilizer (SBf) is increased, the vehicle tends to indicate the under-steer. Therefore, according to the present embodiment, the vertical load to the driving wheel located at the inside of the turning locus is increased, and change in the steer characteristic of the vehicle is restrained.

According to the third embodiment, therefore, if it is determined at Step 106 that they are fallen within the execution region (1) or (2), it proceeds to Step 308, where the modified torsion values (.smf, .smr) are calculated. In this case, limit values (sfm and -srm) are set for the modified torsion values (.smf, .smr), as shown in Step 308 in FIG.8. That is, as the change in the steer characteristic against the change of the torsional rigidity can be estimated in advance, the limits (upper limit value (sfm), lower limit value (-srm)) are provided for enabling the change to be restrained into an acceptable change.

Furthermore, it proceeds to Step 309, where the change in the steer characteristic is restrained to achieve the steer characteristic compensation. That is, if the torsional rigidity of the rear wheel stabilizer (SBr) is decreased and/or the torsional rigidity of the front wheel stabilizer (SBf) is increased, the vehicle tends to indicate the under-steer. Therefore, the braking torque (desired value (Pwtxx)) is applied to the driving wheel located at the inside of the turning locus, to restrain the vehicle from tending to be in the under-steer.

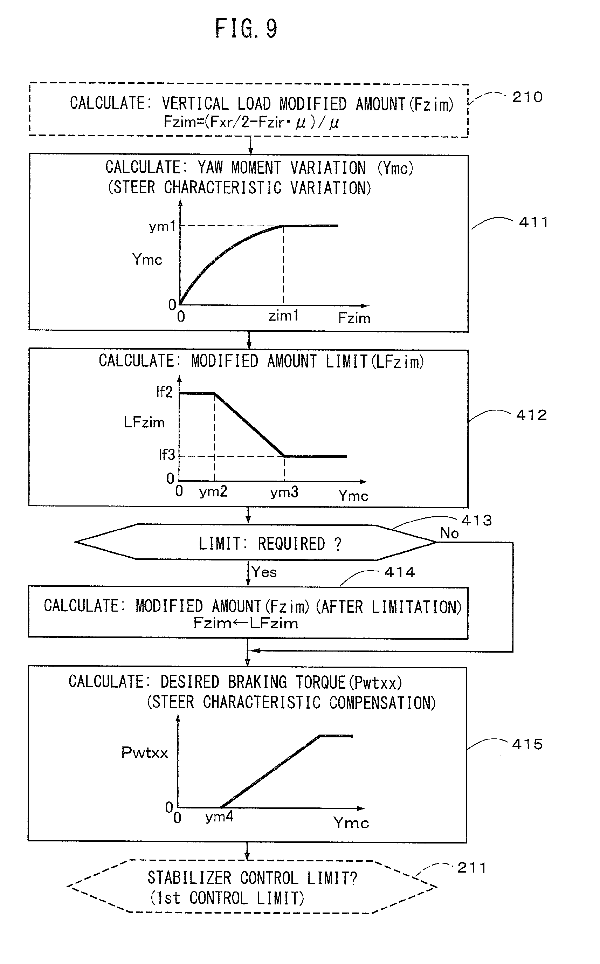

Then, FIG.9 shows a fourth embodiment, wherein Steps 411-415 have been added between Step 210 and Step 211 in FIG.5. That is, at the outset, the yaw moment variation (Ymc) to cause the change in the steer characteristic is estimated at Step 411, based on the vertical load modified amount (Fzim). Furthermore, based on the yaw moment variation (Ymc), a modified amount limit (LFzim), which corresponds to the upper limit value (sfm) and lower limit value (-srm) in the third embodiment, is calculated at Step 412, and the desired braking torque (Pwtxx) is calculated at Step 415. In this case, it is determined at Step 413 whether or not it is required to limit the modified amount. If it is required to limit the modified amount, then the vertical load modified amount (Fzim) after limitation is calculated at Step 414.

As described above, according to the fourth embodiment as shown in FIG.9, the modified amount limit (LFzim) and desired braking torque (Pwtxx) are calculated, based on the yaw moment variation (Ymc). Instead, the modified amount limit (LFzim) and desired braking torque (Pwtxx) may be calculated, based on a steer characteristic variation (.Yr). This steer characteristic variation (.Yr) is calculated on the basis of a comparison result between a desired turning amount (e.g., desired yaw rate) calculated based on the steering angle (.f) and an actual turning amount (e.g., actual yaw rate).

Each embodiment as described above can be applied to a front wheel drive vehicle, or even to a four wheel drive vehicle. That is, in case of the front wheel drive vehicle (so-called, FF vehicle), the torsional rigidity of the front wheel stabilizer may be decreased, and/or the torsional rigidity of the stabilizer for a wheel (e.g., rear wheel) different from that driving wheel may be increased, to increase the vertical load to the front wheel located at the inside of the turning locus. As for the front wheel drive vehicle, the vehicle tends to be in the over-steer, the braking torque for the steer characteristic compensation is applied to at least one of the front wheel located at the inside of the turning locus and the rear wheel located at the outside of the turning locus. Also, in case of the four wheel drive vehicle (so-called, 4WD vehicle), the vertical load control is executed in response to the wheel with its driving force being largely distributed. Especially, as for the four wheel drive vehicle having its rear wheels with the driving force being distributed largely, the same control as the one for the rear wheel drive vehicle is executed. As for the four wheel drive vehicle having its front wheels with the driving force being distributed largely, the same control as the one for the front wheel drive vehicle is executed.

### DESCRIPTION OF CHARACTERS

SBf: front wheel stabilizer
SBr: rear wheel stabilizer
FT, RT: stabilizer actuator
BR: brake actuator
TH: throttle actuator
SW: steering wheel
SA: steering angle sensor
FR,FL,RR,RL: wheel
WHfr,WHfl,WHrr,WHrl: wheel cylinder
WSfr,WSfl,WSrr,WSrl: wheel speed sensor
YR: yaw rate sensor
XG: longitudinal acceleration sensor
YG: lateral acceleration sensor
ECU: electronic control device

## Claims

1. A vertical load control apparatus for a vehicle having a first stabilizer disposed on an axle for driving wheels of the vehicle,
a second stabilizer disposed on a different axle from the axle for driving wheels,
stabilizer control means for adjusting torsional rigidity of the first stabilizer and second stabilizer,
turning state amount obtaining means for obtaining a turning state amount of the vehicle, and
accelerating operation amount obtaining means for obtaining an accelerating operation amount operated by a driver of the vehicle,
the vertical load control apparatus is **characterized in that** the stabilizer control means adjusts the torsional rigidity of at least one of the first stabilizer and second stabilizer, when it is determined on the basis of the results obtained by the turning state amount obtaining means and the accelerating operation amount obtaining means that the turning state amount of the vehicle is equal to or more than a predetermined turning state amount, and that the accelerating operation amount is equal to or more than a predetermined accelerating operation amount.

2. A vertical load control apparatus as set forth in claim 1, wherein the stabilizer control means executes at least one of decreasing the torsional rigidity of the first stabilizer and increasing the torsional rigidity of the second stabilizer.

3. A vertical load control apparatus as set forth in claim 1, wherein the stabilizer control means calculates a modified torsion value to a desired torsion value for at least one of the first stabilizer and second stabilizer, based on the turning state amount and accelerating operation amount.

4. A vertical load control apparatus as set forth in claim 3, wherein the stabilizer control means provides a limit for the modified torsion value.

5. A vertical load control apparatus as set forth in claim 1, further comprising brake control means for applying a braking torque to each wheel of the vehicle,
wherein the brake control means applies a braking torque for compensating a change in a steer characteristic of the vehicle, which is caused by adjusting the torsional rigidity, when the stabilizer control means adjusts the torsional rigidity of at least one of the first stabilizer and second stabilizer.

6. A vertical load control apparatus as set forth in claim 1, further comprising brake control means for applying a braking torque to each wheel of a vehicle of a rear wheel drive system,
wherein the brake control means applies the braking torque to a wheel located at the inside of a turning locus of the vehicle, out of the wheels.

7. A vertical load control apparatus as set forth in claim 1, further comprising brake control means for applying a braking torque to each wheel of a vehicle of a rear wheel drive system,
wherein the stabilizer control means adjusts to increase the vertical load to an inside driving wheel located at the inside of a turning locus of the vehicle, out of the driving wheels, up to a first control limit, and the brake control means applies the braking torque to the inside driving wheel, until the vertical load to the inside driving wheel reaches a second control limit, which is provided on the basis of the first control limit.

8. A vertical load control apparatus as set forth in claim 7, further comprising driving output control means for adjusting the output from a power source of the vehicle, wherein the driving output control means reduces the output from the power source, when the vertical load to the inside driving wheel exceeds the second control limit.

9. A vertical load control apparatus as set forth in claim 4, further comprising brake control means for applying a braking torque to each wheel of the vehicle,
wherein the brake control means applies a braking torque for compensating a change in a steer characteristic of the vehicle, which is caused by adjusting the torsional rigidity of at least one of the first stabilizer and second stabilizer, when at least one of the first stabilizer and second stabilizer reaches the limit for the modified torsion value provided by the stabilizer control means.

10. A vertical load control apparatus as set forth in claim 9, further comprising driving output control means for adjusting the output from a power source of the vehicle, wherein the driving output control means reduces the output from the power source, when at least one of the first stabilizer and second stabilizer reaches the limit for the modified torsion value provided by the stabilizer control means.
